# EUROPÄISCHE PATENTSCHRIFT

(11) **EP 0 416 337 B1**
(45) Veröffentlichungstag und Bekanntmachung des Hinweises auf die Patenterteilung: **10.11.1993**
(21) Anmeldenummer: 90115651.3
(22) Anmeldetag: 16.08.1990
(51) Int. Cl.: B65G 47/61

(54) **Speicherförderer**
Storage conveyor
Convoyeur de stockage

(30) Priorität: 02.09.1989 DE 3929156
(43) Veröffentlichungstag der Anmeldung: 13.03.1991
(73) Patentinhaber: DÜRKOPP ADLER AKTIENGESELLSCHAFT, D-33719 Bielefeld (DE)
(72) Erfinder: Grube, Erwin, D-4800 Bielefeld 18 (DE); Kuhlmann, Walter, D-4937 Lage (DE); Elges, Friedhelm, D-4800 Bielefeld 18 (DE)
(74) Vertreter: Rehmann, Klaus-Thorsten, Dipl.-Ing.

(56) Entgegenhaltungen:
- EP-A- 0 050 245
- DE-B- 1 937 491
- DE-C- 3 807 280
- SOVIET INVENTIONS ILLUSTRATED,P,Q Sektionen, Woche 8629, 27. August 1986 DERWENT PUBLICATION LTD., London Q 35

## Beschreibung

Die Erfindung betrifft einen Speicherförderer für auf Bügel hängende Kleidungsstücke nach dem Oberbegriff des Anspruchs 1. Es ist allgemein bekannt, Güter, die hängend auf Bügel gelagert werden sollen, statisch auf Regalstangen einzuhängen. Um den immer mehr geforderten Anspruch nach Dynamisierung zu erfüllen, wurden Speicherförderer durch den Einsatz unterschiedlicher Fördermittel geschaffen. Beispielsweise ist es bekannt, wie in der DE-OS 25 37 442 offenbart, das auf Kleiderbügeln hängende Fördergut in einen auf Schienen laufenden Hängebahnwagen (sogenannter Trolley) einzuhängen und auf einzelnen Schienensträngen zu stauen, wobei dann, wenn das Fördergut benötigt wird, der entsprechende Trolley an eine Umladestation oder den entsprechenden Arbeitsplatz transportiert wird.

Die DE-C-38 07 280 offenbart eine Entladevorrichtung für Trolleys. Zwecks selbsttätigen Entladens ist vorgesehen, an einer Gleitstange einen sich bis in unmittelbare Nähe der Förderbahn der Tragstange des Trolleys erstreckenden Endabschnitt auszubilden, der von der Förderbahn aus ansteigt und in einen abfallenden Abschnitt übergeht. Parallel zum Endabschnitt der Gleitstange ist ein Schleppförderer angeordnet. Dieser Schleppförderer weist Mitnehmer auf, die den Bügelhaken von oben erfassen und entlang der Gleitstange schieben, während der Trolley hieran vorbeiläuft.

Aus der DE-A-12 27 833 ist es bekannt, die auf Bügeln hängenden Kleidungsstücke in eine umlaufende Spindel einzuschleusen, wobei von der Spindel sowohl Transportals auch Stauaufgaben wahrgenommen werden können, je nachdem ob die Spindel sich im Augenblick dreht oder nicht.

Sowohl die Trolleylagerung als auch die Spindellagerung werden zwar dem Anspruch nach Dynamik gerecht, der Trolley hat aber den Nachteil, daß nur eine beschränkte Anzahl von Teilen auf ihm Platz finden und die darin unterzubringende Stückzahl nicht unbedingt konform ist zu der Stückzahl pro Los, die benötigt wird. Bei der Spindellagerung stellt sich nachteilig dar, daß die Schnittstellen im Übergabe- und Abnahmebereich nicht die Verfügbarkeit aufweisen, die für Systeme dieser Art erforderlich sind, da, um ausreichende Festigkeit zu besitzen, die Spindeln nur beschränkte Speicherlänge abdecken können. Zu lange Spindeln würden sich durchbiegen.

Der Erfindung liegt die Aufgabe zugrunde, ein dynamisches Lagerungssystem (Speicherförderer) zu schaffen, mit dem eine losgrößenunabhängige Lagerung möglich wird, das einen automatischen Transport der auf Bügeln hängenden Güter gewährleistet, das eine nahezu unbegrenzte Speicherlänge und das selbsttätige und kontinuierliche Austragen der gestauten Bügel erlaubt. Die Lösung der Aufgabe erfolgt durch die Merkmale des Anspruchs 1. Vorteilhafte Ausgestaltungen ergeben sich aus den Unteransprüchen.

Durch den erfindungsgemäßen Speicherförderer ist es möglich, die Aufgabeeinrichtung geradlinig zur Speicherrichtung verlaufen zu lassen, wodurch Beeinträchtigungen durch Richtungsänderungen bei der Aufgabe vermieden werden. Durch Einsatz einer einfach führbaren Förderkette kann die Staulänge des Förderers beliebig lang werden. Gleichzeitig ist eine störungsfreie Austragung aus dem Speicherförderer möglich, weil die Bügel im Kopfbereich ihrer Schwerpunktlage gespeichert werden, jedoch auf der Spitze der Bügel mittels eines Zahnriemens oder ähnlichen Medien ausgetragen werden. Die Austragung kann mit höherer Geschwindigkeit erfolgen, um so die gestauten Bügel zu entzerren. Dabei greift der Zahnriemen so am Bereich der Bügelspitze an, daß der Bügel sanft aus dem Speicherförderer herausgehoben wird. Außerdem ist es möglich, die Aufgabe der zu speichernden Teile im Taktverfahren erfolgen zu lassen, während die Entleerung des Förderers im Taktverfahren oder kontinuierlich erfolgen kann.

Anhand einer Zeichnung soll die Erfindung nachfolgend näher beschrieben werden.

Es zeigt:

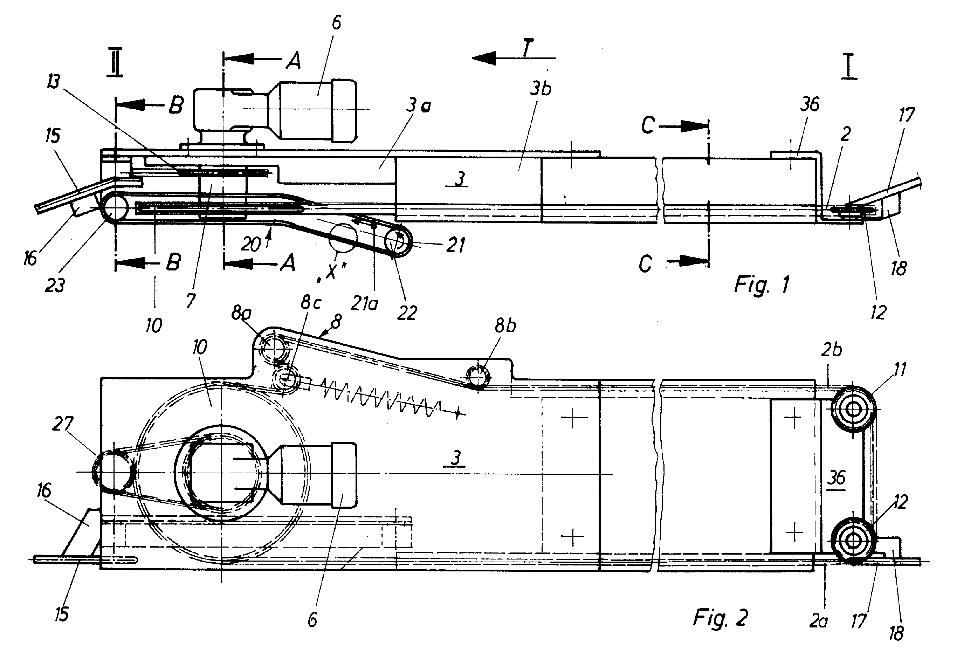

- Fig. 1: die Seitenansicht des Speicherförderers in vereinfachter Darstellung,
- Fig. 2: die Draufsicht des Speicherförderers nach Fig. 1,
- Fig. 3: den Schnitt entlang der Linie A-A gemäß Fig. 1,
- Fig. 4: die Ausschnittsvergößerung "X" nach Figur 1,
- Fig. 5: den Schnitt entlang der Linie B-B gemäß Fig. 1,
- Fig. 6: den Schnitt entlang der Linie C-C gemäß Fig. 1,

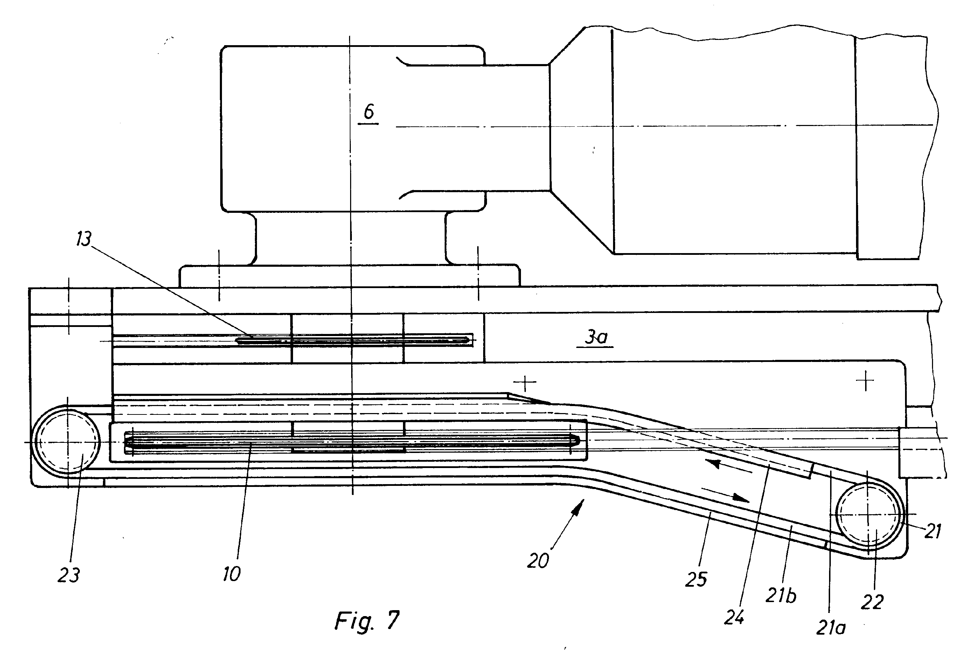

- Fig. 7: eine vergrößerte Teildarstellung nach Fig. 1.

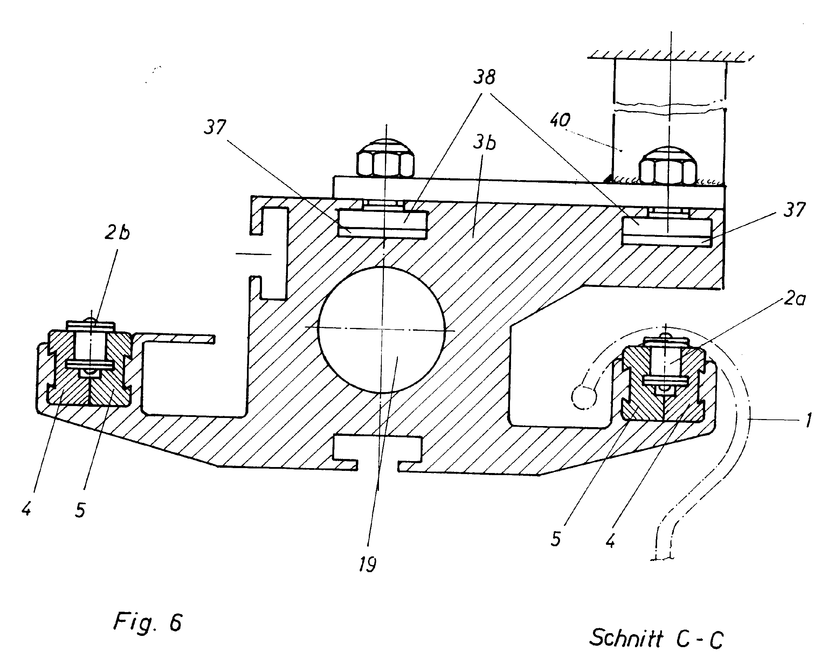

Im Grundkörper 3 des Speicherförderers ist die Förderkette 2 in Gleitschienen 4, 5 geführt. Diese aus Kunststoff bestehenden Gleitschienen 4, 5 sind formschlüssig im Grundkörper 3 gelagert. Die in vorteilhafter Weise aus einer handelsüblichen Rollenkette gebildete Förderkette 2 läuft über ein vor der Austragsstelle II angeordnetes, angetriebenes Zahnrad 10 und zwei beidseitig vom Grundkörper 3 an der Aufgabestelle I angeordneten Umlenkritzel 11, 12 in Transportrichtung T horizontal um.
Der Grundkörper 3 besteht aus einzelnen miteinander verbindbaren Teilen 3a, 3b; wobei mehrere der Einzelteile 3b (Fig. 6) hintereinander geschaltet werden können, um einen Speicherförderer geeigneter Baulänge zu erhalten und das innerhalb eines Förderers nur einmal benötigte, die Kopfstelle bildende Grundkörper-Bauteil 3a an der Austragsstelle II angeordnet ist.

An der Kopfstelle ist auf dem Grundkörper 3 bzw. 3a ein Antriebsmotor 6 angeflanscht, dessen Antriebswelle 7 durch die im Grundkörper-Bauteil 3a vorgesehene Bohrung 39 hindurchragt und das Antriebszahnrad 10 sowie das noch weiter unten zu erläuternde Antriebszahnrad 13 trägt.

Das Grundkörper-Bauteil 3a weist eine geringere Vertikalerstreckung auf als die Teile 3b, um ausreichend Platz für die Antriebszahnräder 10, 13 zu schaffen.

In dem der Förderseite abgewandten Trum 2b der Förderkette 2 ist eine Kettenspanneinrichtung 8 integriert, die aus zwei ortsfest angeordneten Ritzeln 8a, b und dem beweglichen, über eine Zugfeder belasteten Ritzel 8c besteht. Die Ritzel 8a, b, c sind in Umlaufrichtung der Förderkette 2 hinter dem Antriebszahnrad 10 so angeordnet, daß die Förderkette 2 s-förmig die Ritzel 8c, 8a umgreift. Durch das federbelastete Ritzel 8c wirkt dabei permanent eine die Kette 2 spannende Zugkraft.

Seitlich vom Grundkörper 3 ist auf der Förderseite (Trum 2a) vor der Kopfstelle die Austrageinrichtung 20 angeordnet, die im wesentlichen besteht aus:

Dem Förderband 21, dem Antriebsritzel 23 und dem Ritzel 22, den Führungsblechen 24, 25 sowie dem Getriebe 26.

Die Austrageinrichtung 20 wird mittels der Kette 14, die über das auf der Motorwelle 7 befestigte Antriebszahnrad 13 und das Eingangsritzel 27 des Getriebes 26 läuft, angetrieben. Bei dem Getriebe 26 handelt es sich um ein einfaches Kegelradgetriebe, mit der in Wälzlagern 28, 29 gelagerten, vertikal angeordneten, daß Eingangsritzel 27 und das Kegelrad 32 tragenden Eingangswelle 34 und der ebenfalls in Wälzlagern 30, 31 gelagerten, horizontal angeordneten, das mit dem Kegelrad 32 in Eingriff stehende Kegelrad 33 und das Antriebsritzel 23 aufweisenden Ausgangswelle 35.

Im Ausführungsbeispiel ist die Getriebeübersetzung so gewählt, daß das Förderband 21 eine gleichgerichtete, aber höhere Umlaufgeschwindigkeit als die Förderkette 2 besitzt.

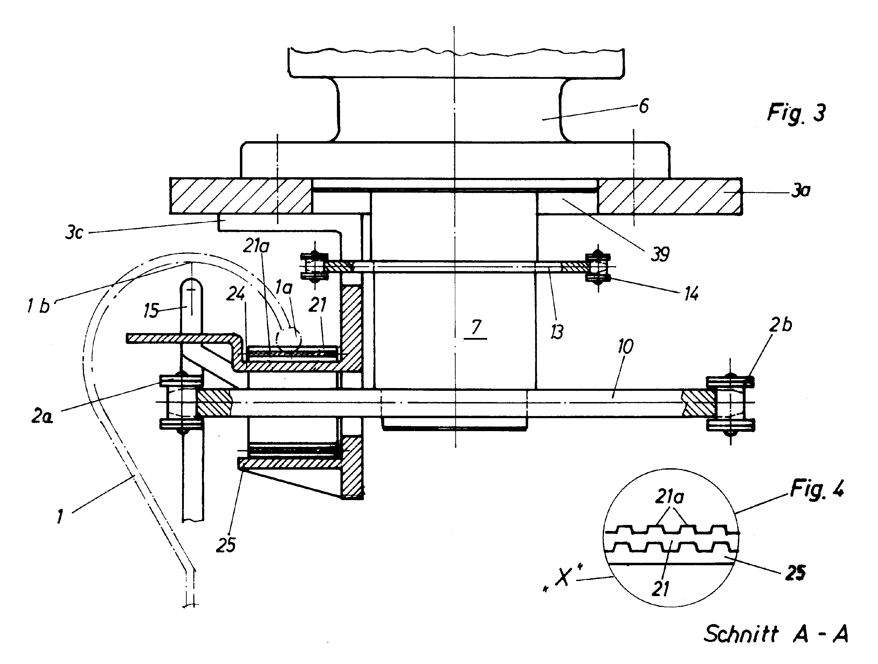

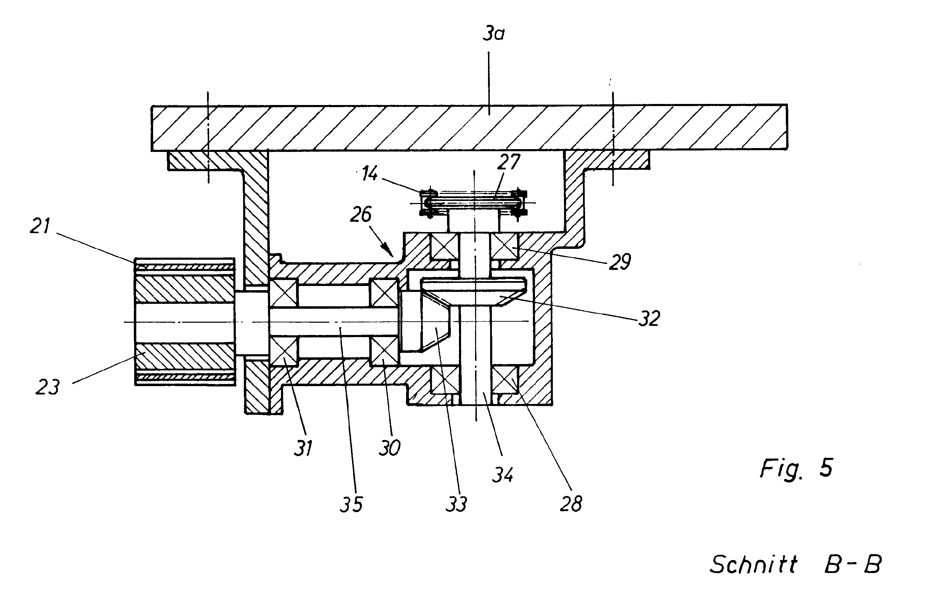

Wie Fig. 3 zeigt, ist das Förderband 21, das in vorteilhafter Weise aus einem beidseitig gezahnten Riemen besteht (Fig. 4), zwischen dem zum Bügeltransport dienenden Trum 2a der Förderkette 2 und dem Grundkörper 3 bzw. dem am Grundkörper-Bauteil 3a angeflanschten Winkelstück 3c angeordnet.
Der über die Ritzel 23, 22 laufende Zahnriemen 21 wird über am Winkelstück 3c befestigte Führungsbleche 24, 25 so geführt, daß ausgehend von dem unterhalb der Förderkette 2 am Grundkörper 3 gelagerten Ritzel 22 seine schräg nach oben gerichtete Umlaufbewegung in eine horizontale, parallel zur Förderkette 2 verlaufende übergeht. Weil das Antriebsritzel 23 in derselben Vertikalebene wie die Förderkette 2 angeordnet ist, verläuft das obere Trum 21a in einer über der Förderkette 2 befindlichen Vertikalebene und das untere Trum 21b in einer unterhalb dazu befindlichen.

An der Kopfstelle ist in Transportrichtung T hinter der Austrageinrichtung 20 die Austragstelle II, die in einfachster Form durch eine in der Transportrichtung T verlaufende Gleitschiene 15 gebildet wird, deren Anfangsstück in einer oberhalb des Zahnriemens 21 befindlichen Ebene parallel zu diesem angeordnet ist und diesen entgegen der Transportrichtung T ein Stück überdeckt.
In Höhe des Zentrums des Antriebsritzels 23 knickt die Gleitschiene 15 nach unten ab und geht in einen hier nicht dargestellten, beliebig ausgebildeten Förderstrang über. Mittels des Bügels 16 ist die Gleitschiene 15 am Grundkörper 3 (bzw. Grundkörper-Bauteil 3a) gehaltert.

An der Aufgabestelle I ist eine schräg von oben kommende, in Transportrichtung T gradlinig verlaufende Schiene 17 über den Bügel 18 am Grundkörper 3 (bzw. Grundkörper-Bauteil 3b) befestigt.

Das Grundkörper-Bauteil 3b weist einen an sich massiven Querschnitt auf (Fig. 6) mit einer im Zentrum angeordneten durchgehenden Bohrung 19. In diese Bohrung 19 kann ein Rohr passenden Durchmessers (nicht dargestellt) eingesteckt werden, so daß mehrere der Bauteile 3b hintereinander angeordnet und über das Rohr miteinander verbunden werden können, und zwar soviele, daß die gewünschte Länge des Speicherförderers hergestellt ist. Dem Fachmann ist geläufig, daß zur genauen Positionierung der Bauteile 3b an deren Anschlußseiten Paßstifte und Passungsbohrungen (hier nicht gezeigt) vorhanden sein müssen, um ein späteres Verdrehen auszuschließen.

An dem der Aufgabestelle I zugeordneten Ende des Stauförderers wird das Winkelstück 36 auf den die Umlenkritzel 11, 12 über hier nicht dargestellte Wälzlager gelagert sind, mit dem den Anfang bildenden Grundkörper-Bauteil 3b verschraubt.
Auf der Oberseite des Grundkörpers 3 sind Aussparungen 37 vorgesehen, in die handelsübliche Schrauben - sogenannte Halfenschrauben 38 - eingreifen können, um den Stauförderer über das Winkeleisen 40 an der Hallendecke zu befestigen, wie in Fig. 6 schematisch angedeutet ist.

Nachfolgend sei die Funktionsweise des erfindungsgemäßen Stauförderers naher erläutert:

Die auf Kleiderbügeln hängenden Kleidungsstücke rutschen von einem hier nicht gezeigten Förderstrang kommend über die Gleitschiene 17 an der Aufgabestelle I in den Stauförderer, wobei der Kopfbereich des Bügelhakens 1 auf der Schiene 17 gleitet, die Bügel also "eingehängt sind". Am Ende der Gleitschiene 17, das in Transportrichtung T über das Zentrum des Umlenkritzels 12 hinausragt, fallen die Kleiderbügel mit dem Bügelhaken 1 auf die Förderkette 2 (Fördertrum 2a; vgl. Fig. 6). Von der Förderkette 2 werden die Kleiderbügel nun in Richtung Austragstelle II transportiert. Dabei ist es möglich, die Förderkette 2 taktweise zu betreiben, um die einzelnen Bügel innerhalb des an sich beliebig langen, durch die Förderkette 2 bzw. den Grundkörper 3 gebildeten Förderers zu speichern.

Von der Förderkette 2 werden die Kleiderbügel nun in Richtung Austragstelle II transportiert. An der Kopfstelle werden die Bügelhaken 1 von dem angetriebenen, schräg nach oben führenden, die Transportrichtung T schneidenden Zahnriemen 21 ergriffen. Dabei hakt sich die Bügelspitze 1a in eine zwischen zwei Zähnen 21a befindliche Vertiefung des Zahnriemens 21 ein. Da der Verlauf des Zahnriemens 21 nach oben gerichtet ist, wird der Bügelhaken 1 angehoben und kommt außer Eingriff zur Förderkette 2. Der Bügelhaken 1 wird nun soweit aus der Förderkette 2 herausgehoben, daß der Kopfbereich 1b des Bügels 1 sich in einer Ebene über der Gleitschiene 15 befindet (vgl. Fig. 3). Ist diese Höhe erreicht, erfolgt ein horizontaler Weitertransport, bis sich der Bügelhaken 1 über der Gleitschiene 15 befindet. Im weiteren Verlauf kehrt der Zahnriemen 21 seine Transportrichtung um, so daß der Bügelhaken 1 mit seinem Kopfbereich 1b auf die Gleitschiene 15 fällt und der Bügel an ihr hinabgleitet.

Dadurch daß der Bügel 1 an seiner Spitze 1a angehoben wird, kann die Gleitschiene 15 geradlinig so weiter geführt werden, daß die bisherige Transportrichtung beibehalten wird.

Wenn die Transportgeschwindigkeit des Zahnriemens 21 höher ist als die der Förderkette 2 erfolgt mit dem Anheben der Bügelhaken 1 gleichzeitig ein Vereinzelungsprozess der gestauten Kleidungsstücke.

## Patentansprüche

1. Speicherförderer für auf Bügel hängende Kleidungsstücke, mit
- einer angetriebenen horizontal umlaufenden Förderkette (2),
- einer Aufgabevorrichtung mit der die Bügel auf die Förderkette (2) aufgegeben werden,
--wobei die Bügelhaken (1) die Förderkette (2) von oben übergreifen,
- einer Austragvorrichtung (20), mit der die Bügel von der Förderkette (2) abgenommen und auf eine Gleitschiene (15) übergeben werden,
-- wobei die Austragvorrichtung (20) aus einem in Transportrichtung (T) in einer vertikalen Ebene umlaufenden Förderband (21) besteht,
--- das obere Trum (21a) des Förderbandes (21) verläuft von einer unterhalb der Bewegungsebene der Bügelhakenspitzen (1a) der Bügelhaken (1) liegende Ebene schräg aufwärts in eine oberhalb der Förderkette (2) liegenden Ebene,
--- das Förderband (21) ist so dicht an dem die Bügel (1) tragenden Trum (2a) der Förderkette (2) entlanggeführt, daß die Bügelspitzen (1a) der Bügelhaken (1) zum Austrag darauf aufsetzen.

2. Speicherförderer nach Anspruch 1,
wobei das Förderband (21) zwischen den Trums (2a, 2b) der Förderkette (2) angeordnet ist.

3. Speicherförderer nach Anspruch 1,
wobei das Förderband (21) in der oberhalb der Förderkette (2) liegenden Ebene horizontal fortgeführt ist.

4. Speicherförderer nach Anspruch 3,
wobei die Horizontalerstreckung des Förderbandes (21) unter die Gleitschiene (15) reicht.

5. Speicherförderer nach einem oder mehreren der vorstehenden Ansprüche,
wobei das Förderband (21) aus einem beidseitig gezahnten Riemen besteht.

6. Speicherförderer nach Anspruch 1,
wobei die Förderkette (2) eine Rollenkette ist.

## Claims

1. A storage conveyor for garments hanging on clothes hangers, having
- a driven, horizontally travelling conveyor chain (2),
- a feeding device with which the hangers are fed onto the conveyor chain (2),
- - in which the hanger hooks (1) overlap the conveyor chain (2) from above,
- a removal device (20), with which the hangers are removed from the conveyor chain (2) and transferred to a slide rail (15),
- - in which the removal device (20) comprises a conveyor belt (21) travelling in a vertical plane in the direction of transport (T),
--- the upper course (21a) of the conveyor belt (21) runs from a plane lying underneath the plane of movement of the ends (1a) of the hanger hooks obliquely upwards to a plane above the conveyor chain (2),
--- the conveyor belt (21) is guided so closely to the course (2a) of the conveyor chain (2) carrying the hangers (1) that the ends (1a) of hanger hooks (1) contact it for removal.

2. A storage conveyor according to Claim 1,
in which the conveyor belt (21) is arranged between the courses (2a, 2b) of the conveyor chain (2).

3. A storage conveyor according to Claim 1,
in which the conveyor belt (21) then travels horizontally in a plane above the conveyor chain (2).

4. A storage conveyor according to Claim 3,
in which the conveyor belt (21) extends horizontally beneath the slide rail (15).

5. A storage conveyor according to one or more of the above claims,
in which the conveyor belt (21) comprises a belt toothed on both sides.

6. A storage conveyor according to Claim 1,
in which the conveyor chain (2) is a roller chain.

## Revendications

1. Transporteur-stockeur pour des vêtements accrochés à des cintres, avec
- une chaîne transporteuse motorisée (2), circulant horizontalement,
- un dispositif de chargement, par lequel les cintres sont chargés sur la chaîne transporteuse (2),
-- les crochets (1) des cintres venant en prise par dessus sur la chaîne transporteuse (2),
- un dispositif d'évacuation (20), par lequel les cintres sont déposés de la chaîne transporteuse (2) et transférés sur une glissière (15),
-- le dispositif d'évacuation (20) étant constitué d'une bande transporteuse (21) circulant dans un plan vertical dans la direction de transport (T),
--- le tronçon supérieur (21a) de la bande transporteuse (21) s'étendant, à partir d'un plan situé en dessous du plan de déplacement des sommets (1a) des crochets de cintres (1), en oblique vers le haut dans un plan situé au-dessus de la chaîne transporteuse (2),
--- la bande transporteuse (21) étant guidée de manière tellement proche le long du tronçon (2a) de la chaîne transporteuse (2) portant les cintres, que les sommets (la) des crochets de cintres (1) se posent sur cette bande transporteuse afin d'être déchargés.

2. Transporteur-stockeur selon la revendication 1, dans lequel la bande transporteuse (21) est disposée entre les tronçons (2a, 2b) de la chaîne transporteuse (2).

3. Transporteur-stockeur selon la revendication 1, dans lequel la bande transporteuse (21) est prolongée horizontalement dans le plan situé au-dessus de la chaîne transporteuse (2).

4. Transporteur-stockeur selon la revendication 3, dans lequel la bande transporteuse (21) s'étend horizontalement jusqu'en dessous de la glissière (15).

5. Transporteur-stockeur selon une ou plusieurs des revendications précédentes, dans lequel la bande transporteuse (21) est constituée d'une courroie crantée des deux côtés.

6. Transporteur-stockeur selon la revendication 1, dans lequel la chaîne transporteuse (2) est une chaîne à rouleaux.
